(19) Europäisches Patentamt
European Patent Office
Office européen des brevets

(11) **EP 4 694 355 A1**

(12) **EUROPEAN PATENT APPLICATION**
published in accordance with Art. 153(4) EPC

(43) Date of publication:
**11.02.2026 Bulletin 2026/07**

(21) Application number: **24732160.7**

(22) Date of filing: **05.04.2024**

(51) International Patent Classification (IPC):
*H04W 40/24* (2009.01)    *H04W 40/02* (2009.01)
*H04W 76/11* (2018.01)    *H04W 76/14* (2018.01)
*H04W 88/04* (2009.01)    *H04W 92/18* (2009.01)

(52) Cooperative Patent Classification (CPC):
**H04W 40/02; H04W 40/24; H04W 76/11;
H04W 76/14; H04W 88/04; H04W 92/18**

(86) International application number:
**PCT/KR2024/004516**

(87) International publication number:
**WO 2024/210616 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 US 202363457767 P**

(71) Applicant: **LG Electronics Inc.
Seoul 07336 (KR)**

(72) Inventors:
• **LEE, Youngdae**
  **Seoul 06772 (KR)**
• **BACK, Seoyoung**
  **Seoul 06772 (KR)**
• **KIM, Laeyoung**
  **Seoul 06772 (KR)**
• **KIM, Seokjung**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR PERFORMING UE-TO-UE RELAY PROCEDURE IN WIRELESS COMMUNICATION SYSTEM**

(57)    A method and apparatus for performing communication in a wireless communication system are disclosed. A method performed by a first UE according to an embodiment of the present disclosure may include receiving, from a relay UE, a first data unit; and decoding the first data unit including a first identifier (ID) of a second UE in a first layer and a second ID of the second UE in a second layer, and the second UE related to the first data unit may be identified by the first UE based on a combination of the first ID and the second ID.

FIG.10

RECEIVING THE FIRST DATA UNIT FROM THE RELAY UE — S1010

DECODING THE FIRST DATA UNIT INCLUDING THE FIRST ID OF THE SECOND UE IN THE FIRST LAYER AND THE SECOND ID OF THE SECOND UE IN THE SECOND LAYER — S1020

**Description**

[TECHNICAL FIELD]

The present disclosure relates to a wireless communication system, and more specifically, to a method and device for performing a UE-to-UE (U2U) relay procedure in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing a U2U relay procedure in a wireless communication system.

The technical problem of the present disclosure is to provide a method of performing communication between one or more source UEs and destination UEs through a relay UE.

The technical problems to be achieved by the present disclosure are not limited to the above-described technical objects, and other technical problems which are not described herein will be clearly understood by those skilled in the pertinent art from the following description.

[Technical Solution]

According to an embodiment of the present disclosure, a method performed by a first UE in a wireless communication system may include receiving, from a relay UE, a first data unit; and decoding the first data unit including a first identifier (ID) of a second UE in a first layer and a second ID of the second UE in a second layer, and the second UE related to the first data unit may be identified by the first UE based on a combination of the first ID and the second ID.

According to an embodiment of the present disclosure, a method performed by a relay UE in a wireless communication system may include receiving a second data unit from a second UE; and transmitting a first data unit based on the second data unit to a first UE, and the second data unit includes a fourth identifier (ID) of the first UE in a first layer and a fifth ID of the first UE in a second layer, and the first UE related to the second data unit may be identified by the relay UE based on a combination of the fourth ID and the fifth ID.

[Technical Effects]

According to various embodiments of the present disclosure, a method and device for performing a U2U relay procedure in a wireless communication system may be provided.

According to various embodiments of the present disclosure, a method of performing communication between one or more source UEs and a destination UE through a relay UE may be provided.

According to various embodiments of the present disclosure, a method for efficiently identifying a terminal that transmits and receives data within a U2U relay procedure may be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 shows a procedure for performing V2X or SL communication according to transmission mode in a wireless communication system to which the present disclosure may be applied.

FIG. 8 illustrates a user plane protocol stack for a UE-to-network (U2N) relay procedure in a wireless communication system to which the present disclosure may be applied.

FIG. 9 illustrates a control plane protocol stack for a U2N relay procedure in a wireless communication system to which the present disclosure may be applied.

FIG. 10 is a diagram illustrating a process in which a first terminal performs communication according to an embodiment of the present disclosure.

FIG. 11 is a diagram for explaining a process in which a relay UE performs communication according to an embodiment of the present disclosure.

FIG. 12 illustrates a SRAP PDU format with a SRAP header according to an embodiment of the present disclosure.

FIG. 13 illustrates a U2U link through a relay terminal according to an embodiment of the present disclosure.

FIG. 14 illustrates a block diagram of a wireless communication device according to an embodiment of the present disclosure.

[DETAILED DESCRIPTION]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing

- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

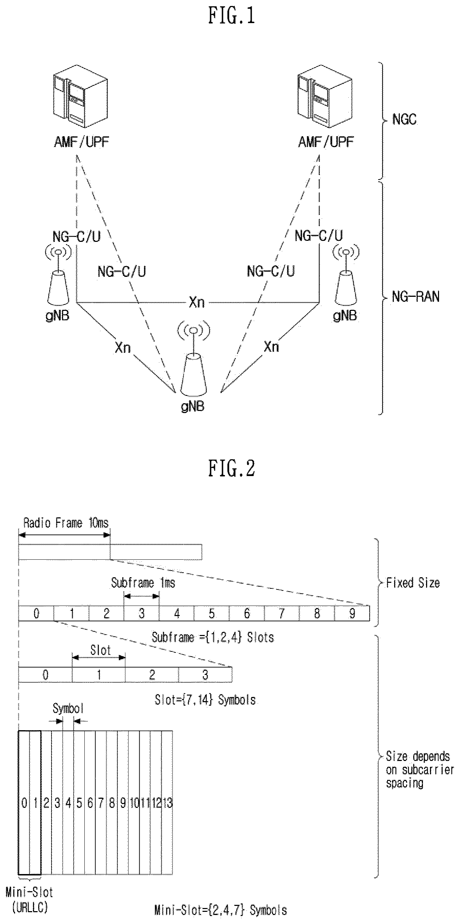

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |

(continued)

| μ | Δf=2^μ·15 [kHz] | CP |
|---|---|---|
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu\{0,...,N_{slot}^{subframe,\mu}-1\}$ in a subframe and are numbered in an increasing order of $n_{s,f}^\mu\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

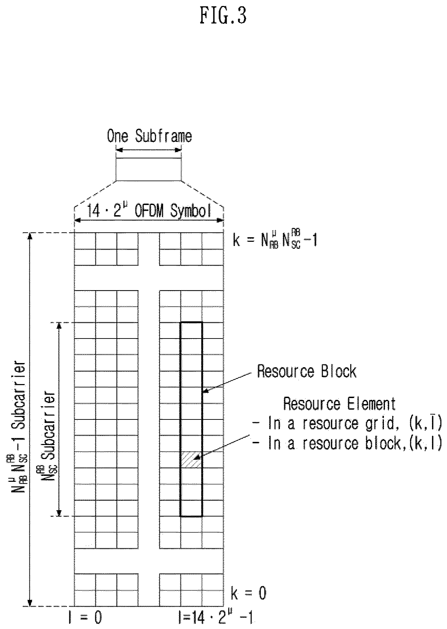

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

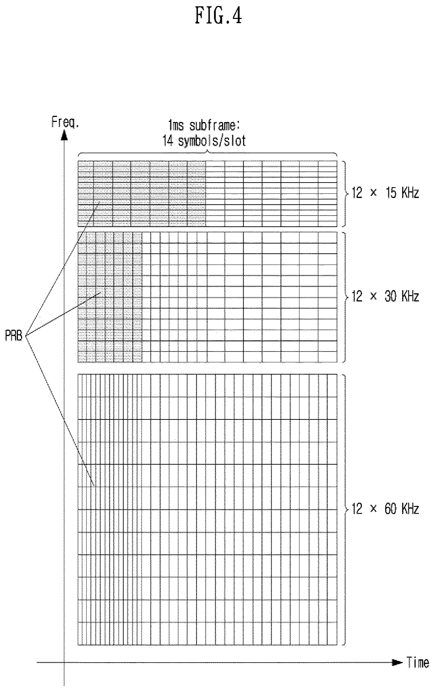

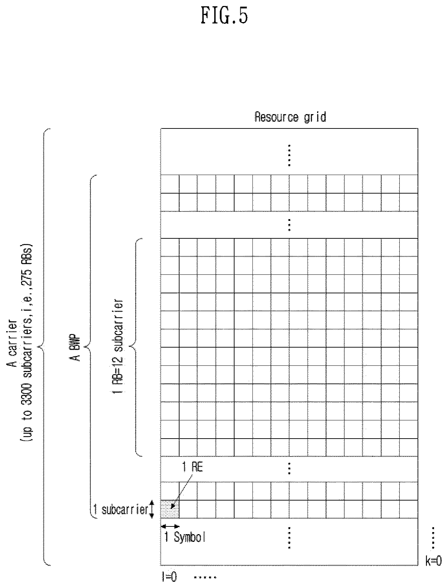

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

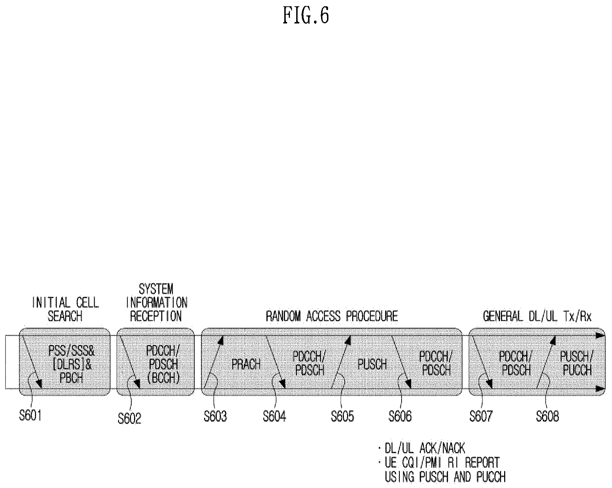

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

V2X (vehicle-to-everything)/sidelink (SL: sidelink) communication

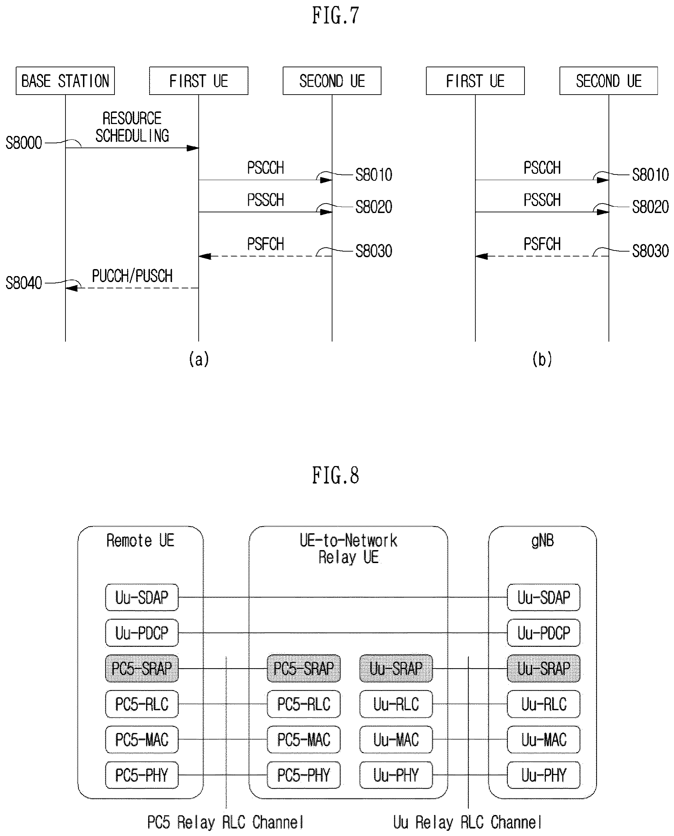

FIG. 7 shows a procedure for performing V2X or SL communication according to transmission mode in a wireless communication system to which the present disclosure may be applied.

The embodiment of FIG. 7 may be combined with various embodiments of the present disclosure. In various embodiments of the present disclosure, the transmission mode may be referred to as a mode or resource allocation mode. Hereinafter, for convenience of explanation, the transmission mode in LTE may be referred to as the LTE transmission mode, and the transmission mode in NR may be referred to as the NR resource allocation mode.

For example, FIG. 7(a) shows the operation of the UE related to LTE transmission mode 1 or LTE transmission mode 3. Alternatively, for example, FIG. 7(a) shows the operation of the UE related to NR resource allocation mode 1. For example, LTE transmission mode 1 may be applied to general SL communication, and LTE transmission mode 3 may be applied to V2X communication.

For example, FIG. 7(b) shows the operation of the UE related to LTE transmission mode 2 or LTE transmission mode 4. Alternatively, for example, FIG. 7(b) shows the operation of the UE related to NR resource allocation mode 2.

Referring to FIG. 7(a), in LTE transmission mode 1, LTE transmission mode 3, or NR resource allocation mode 1, the base station may schedule SL resources to be used by the UE for SL transmission (S8000). For example, the base station may transmit information related to SL resources and/or information related to UL resources to the first UE. For example, the UL resources may include PUCCH resources and/or PUSCH resources. For example, the UL resource may be a resource for reporting SL HARQ feedback to the base station.

For example, the first UE may receive information related to dynamic grant (DG) resources and/or information related to configured grant (CG) resources from the base station. For example, CG resources may include CG Type 1 resources or CG Type 2 resources. In this disclosure, the DG resource may be a resource that the base station configures/assigns to the first UE through DCI. In the present disclosure, the CG resource may be a (periodic) resource that the base station configures/allocates to the first UE through a DCI and/or RRC message. For example, in the case of CG type 1 resources, the base station may transmit an RRC message including information related to the CG resource to the first UE. For example, for a CG type 2 resource, the base station may transmit an RRC message including information related to CG resources to the first UE, and the base station may transmit a DCI related to activation or release of CG resources to the first UE.

The first UE may transmit PSCCH (e.g., Sidelink Control Information (SCI) or 1st-stage SCI) to the second UE based on the resource scheduling (S8010).

The first UE may transmit PSSCH (e.g., 2nd-stage SCI, MAC protocol data unit (PDU), data, etc.) related to the PSCCH to the second UE (S8020).

The first UE may receive the PSFCH related to the PSCCH/PSSCH from the second UE (S8030). For example, HARQ feedback information (e.g., NACK information or ACK information) may be received from the second UE through the PSFCH.

The first UE may transmit/report HARQ feedback information to the base station through PUCCH or PUSCH (S8040). For example, the HARQ feedback information reported to the base station may be information that the first UE generates based on HARQ feedback information received from the second UE. For example, the HARQ feedback information reported to the base station may be information that the first UE generates based on preset rules. For example, the DCI may be a DCI for scheduling of SL. For example, the format of the DCI may be DCI format 3_0 or DCI format 3_1.

Referring to FIG. 7(b), in LTE transmission mode 2, LTE transmission mode 4, or NR resource allocation mode 2, the UE may determine the SL transmission resource within the SL resource configured by the base station/network or within the preset SL resource. For example, the set SL resource or preset SL resource may be a resource pool. For example, the UE may autonomously select or schedule resources for SL transmission. For example, the UE may self-select resources within a configured resource pool and perform SL communication. For example, the UE may perform sensing and resource (re)selection procedures to select resources on its own within a selection window. For example, the sensing may be performed on a sub-channel basis.

The first UE, which has independently selected a resource within the resource pool, may transmit a PSCCH (e.g., SCI or 1st-stage SCI) to the second UE using the resource (S8010).

The first UE may transmit a PSSCH (e.g., 2nd-stage SCI, MAC PDU, data, etc.) related to the PSCCH to the second UE (S8020).

The first UE may receive the PSFCH related to the PSCCH/PSSCH from the second UE (S8030).

Referring to FIG. 7(a) or FIG. 7(b), for example, the first UE may transmit SCI to the second UE on PSCCH. Or, for example, the first UE may transmit two consecutive SCIs (e.g., 2-stage SCI) on the PSCCH and/or PSSCH to the second UE. In this case, the second UE may decode two consecutive SCIs (e.g., 2-stage SCI) to receive the PSSCH from the first UE. In the present disclosure, SCI transmitted on PSCCH may be referred to as 1st SCI, first SCI, 1st-stage SCI, or 1st-stage SCI format, and SCI transmitted on PSSCH may be referred to as second SCI, second SCI, 2nd-stage SCI, or 2nd-stage SCI format. For example, the 1st-stage SCI format may include SCI format 1-A, and the 2nd-stage SCI format may include SCI format 2-A and/or SCI format 2-B.

Referring to FIG. 7(a) or FIG. 7(b), in step S8030, the first UE may receive PSFCH based on the description described later. For example, the first UE and the second UE may determine PSFCH resources based on the description described later, and the second UE may transmit HARQ feedback to the first UE using the PSFCH resource.

SL Relay procedure

The SL relay procedure was introduced to support the 5G ProSe U2N relay function to provide network connectivity for UE-to-network (U2N) remote UEs. That is, both L2 and L3 U2N relay architectures can be supported.

The U2N relay UE may be in the RRC_CONNECTED state to perform relaying of unicast data. For L2 U2N relay operation, the following RRC state combinations may be supported.

- Both the U2N relay UE and the U2N remote UE may transmit/receive relayed unicast data only when they are in the RRC_CONNECTED state.
- If all U2N remote UEs connected to the U2N relay UE are in the RRC_INACTIVE or RRC_IDLE state, the U2N relay UE may be in the RRC_IDLE, RRC_INACTIVE, or RRC_CONNECTED state.

For the L2 U2N relay procedure, the U2N remote UE may be configured to use only resource allocation mode 2 for data to be relayed.

A single unicast link may be established between one L2 U2N relay UE and one L2 U2N remote UE. The traffic of the U2N remote UE through a specific U2N relay UE and the traffic of the U2N relay UE must be separated into different Uu RLC channels through Uu.

When the U2N relay function is set for the relay UE and the remote UE, the relay UE may provide a network connection to the U2N remote UE(s). In this case, the remote UE may not have a direct connection to the network while maintaining an indirect connection based on the U2N relay function.

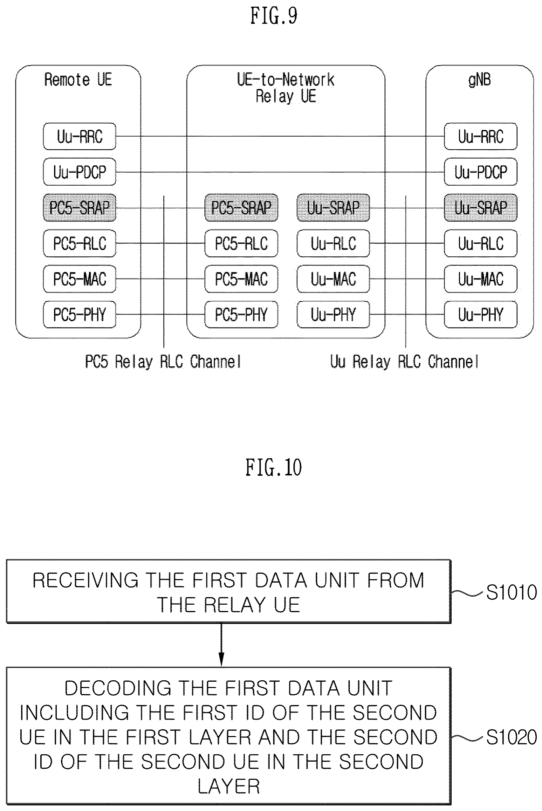

Each of the protocol stacks for the user plane and control plane of the L2 U2N relay architecture may be configured as shown in FIGS. 8 and 9. A sidelink relay adaptation protocol (SRAP) sublayer may be placed above the RLC sublayer for both the control plane (CP) and user plane (UP) on both the PC5 interface and the Uu interface. Between L2 U2N remote UEs and base stations, Uu SDAP (service data adaptation protocol), PDCP (packet data convergence protocol), RRC is terminated, and SRAP, RLC, MAC, and PHY may be terminated at each hop (i.e., link between L2 U2N remote UE and L2 U2N relay UE, link between L2 U2N relay terminal and base station).

For L2 U2N relay, the SRAP lower layer over PC5 hop may be used only for bearer mapping purposes. The SRAP lower layer for relaying messages from L2 U2N remote terminals through BCCH and PCCH may not exist at the PC5 hop. For L2 U2N remote UE messages in signaling radio bearer (SRB) 0, the SRAP sublayer does not exist through the PC5 hop, but the SRAP sublayer may exist through the Uu hop for both DL and UL. Here, SRB0 may be used for transmission of an RRC message associated with a common control channel (CCCH) logical channel.

As an example of the present disclosure, for the uplink in the L2 U2N relay procedure, the Uu SRAP lower layer may support UL bearer mapping between the receiving PC5 relay RLC channel and the transmitting Uu relay RLC channel for relay through the L2 U2N relay UE Uu interface. For uplink relay traffic, different end-to-end RBs (e.g., SRBs or data radio bearers (DRBs)) of the same remote UE and/or other remote UEs may be multiplexed through the same Uu relay RLC channel. Here, the Uu SRAP lower layer may support L2 U2N remote UE identification for UL traffic.

The identification information of the L2 U2N remote UE Uu radio bearer and the local remote UE ID may be included in the Uu SRAP header of the UL for the base station to correlate received packets for a specific PDCP entity associated with the correct Uu radio bearer of the remote UE. The PC5 SRAP sublayer of the L2 U2N remote UE may support UL bearer mapping between the remote UE Uu radio bearer and the egress PC5 relay RLC channel.

As an example of the present disclosure, in the case of downlink in the L2 U2N relay procedure, the Uu SRAP sublayer may support DL bearer mapping at the base station to map the remote UE's SRB, DRB (i.e., end-to-end radio bearer) to the Uu relay RLC channel through the relay UE Uu interface.

The Uu SRAP sublayer may support DL bearer mapping and data multiplexing between multiple end-to-end radio bearers of an L2 U2N remote UE (i.e., SRB or DRB) and/or another L2 U2N remote UE and one Uu relay RLC channel through the relay UE Uu interface.

Uu SRAP lower layer may support remote UE identification for DL traffic. In order to map packets received from the relay UE and the remote UE Uu radio bearer to the relevant PC5 relay RLC channel, the identification information of the remote UE Uu radio bearer and the local remote UE ID may be included in the Uu SRAP header by the base station in the DL. The PC5 SRAP lower layer of the relay UE may support DL bearer mapping between the ingress Uu relay RLC channel and the egress PC5 relay RLC channel.

The remote UE's PC5 SRAP sublayer may correlate received packets for a specific PDCP entity associated with the remote UE's correct Uu radio bearer based on the identification information included in the Uu SRAP header.

The local remote UE ID may be included in both the PC5 SRAP header and the Uu SRAP header. The L2 U2N relay UE may be configured by the base station with a local remote terminal ID to be used in the SRAP header. The remote UE may obtain the local remote ID from the base station through Uu RRC messages including RRCSetup, RRCReconfiguration, RRCResume, and RRCRefoundment. Uu DRB(s) and Uu SRB(s) can be mapped to different PC5 relay RLC channels and Uu relay RLC channels in both PC5 hops and Uu hops.

It is the base station's responsibility to prevent collisions when using local remote terminal IDs. The base station may update the local remote UE ID by transmitting the updated local Remote ID to the relay UE through the RRCReconfiguration message. The serving base station may perform local remote UE ID update independently of the PC5 unicast link L2 ID update procedure.

Meanwhile, in an improved wireless communication system, the UE may support single hop layer-2 and layer-3 U2U relay procedures for unicast services. Here, the U2U relay procedure collectively refers to a procedure in which the source UE transmits data to the relay UE and the relay UE transmits the data to the target (or destination) UE.

In the case of the U2U relay procedure, packets from different source UEs may be multiplexed and relayed to the same destination UE, and packets from the same source UE may be demultiplexed and relayed to different destination UEs. Within the U2U relay procedure, there is a problem that it is not clear how to identify the source UE and destination UE of a specific packet. For example, there is a problem that there is no way to efficiently check which source UE among a plurality of source UEs data received through the relay UE is related to from the perspective of the destination UE.

Hereinafter, a method for identifying each UE within a U2U relay procedure in which one or more source/destination UEs participate is described.

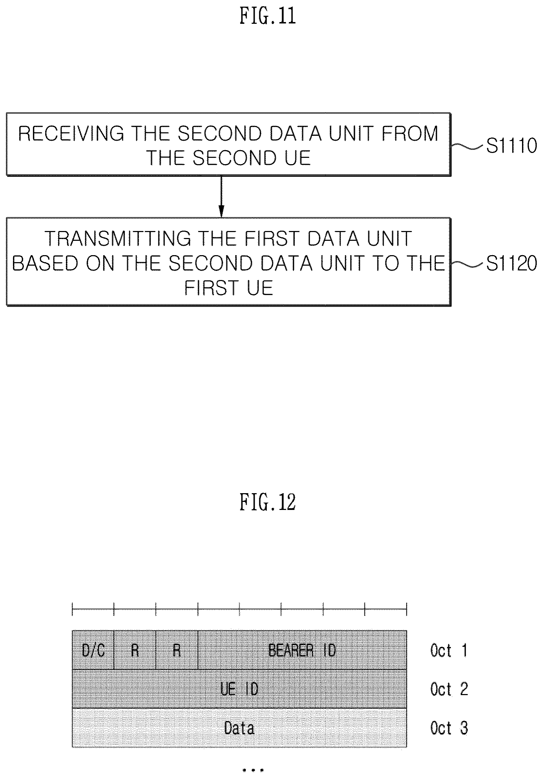

FIG. 10 is a diagram illustrating a process in which a first UE performs communication according to an embodiment of the present disclosure. 10 and 11, the first UE is either a source UE or a destination UE, and the second UE may be implemented as the other one of the source UE and the destination UE. That is, the first UE and the second UE in FIGS. 10 and 11 illustrate a process of performing a U2U procedure through a relay UE.

The first UE may receive the first data unit from the relay UE (S1010).

Before step S1010, a specific bearer related to the relay procedure between the first UE and the second UE may be set up through the relay UE. Additionally, the first UE and the second UE may set up an adaptation layer entity and a PDCP entity associated with a specific bearer through the relay UE.

The first data unit (e.g., first MAC PDU, etc.) received by the first UE from the relay UE may be generated/determined based on the second data unit (e.g., second MAC PDU) received by the relay UE from the second UE. As an example, the second data unit may include the fourth ID of the first UE in the first layer (e.g., local ID for the first UE) and the fifth ID of the second UE in the second layer (layer-2 ID for the second UE). An SRC field or a DST field indicating a fifth ID may be included in the header of the second data unit, and a fourth ID and a third ID related to the specific bearer may be included in the header of the second PDU included in the second data unit.

For example, if the second UE is a source UE, the fifth ID may be indicated through the SRC field, and if the second UE is a destination UE, the fifth ID may be indicated through the DST field. Here, the second PDU is configured based on the second SRAP PDU, and the fourth ID may be indicated by the UE ID field included in the second SRAP PDU.

The relay UE may identify that the second UE has selected the first UE as the target UE in the relay procedure based on the combination of the fourth ID and the fifth ID.

The first UE may decode the first data unit including the first ID of the second UE in the first layer and the second ID of the second UE in the second layer (S1020).

The first UE may identify the second UE associated with the first data unit based on a combination of the first ID (e.g., local ID of the second UE) and the second ID (e.g., layer-2 ID of the second UE). That is, the first UE may identify that the second UE has transmitted the data unit through the relay UE through the combination of the first ID and the second ID included in the first data unit. Accordingly, within a relay procedure in which a plurality of UEs participate as source/destination UEs, the first UE may identify the second UE that transmitted the data unit through the relay UE.

Specifically, the second layer of the first UE may transmit the first ID to the first layer of the first UE, and the first layer of the first UE may identify the second UE associated with the first data unit based on a combination of the first ID and the second ID. Here, the first layer (e.g., SRAP layer, ProSe layer, AS layer, etc.) may be a layer higher than the second layer.

For example, an SRC field or a DST field indicating the second ID may be included in the header of the first data unit. For example, if the first UE is a source UE, the second ID may be indicated through the SRC field, and if the first UE is the destination UE, the second ID may be indicated through the DST field. Here, the first PDU is configured based on the first SRAP PDU, and the first ID may be indicated by the UE ID field included in the first SRAP PDU. Additionally, a first ID and a third ID related to a specific bearer may be included in the header of the first PDU included in the first data unit.

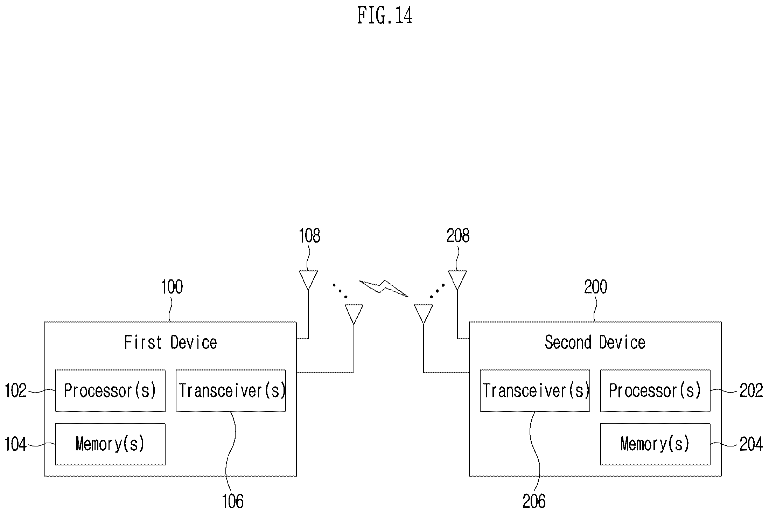

The method described in the example of FIG. 10 may be performed by the first device 100 of FIG. 14. That is, the first UE in FIG. 14 may be implemented as the first device 100. For example, one or more processors 102 of the first device 100 of FIG. 14 may receive the first data unit from the relay UE through one or more transceivers 106. One or more processors 102 may decode the first data unit including the first ID of the second UE in the first layer and the second ID of the second UE in the second layer.

Furthermore, one or more memories 104 of the first device 100 may store instructions for performing the method described in the example of FIG. 10 or the examples described below when executed by one or more processors 102.

FIG. 11 is a diagram for describing a process in which a relay UE performs communication according to an embodiment of the present disclosure.

The relay UE may receive the second data unit from the second UE (S1110).

The second data unit may include the fourth ID of the first UE in the first layer and the fifth ID of the second UE in the second layer. The relay UE may identify that the UE to which the second UE will transmit the data unit (i.e., the target UE within the relay procedure) is the first UE based on the combination of the fourth ID and the fifth ID.

The relay UE may generate a first data unit based on the second data unit. The first data unit may include data (e.g., a data packet, etc.) to be transmitted from the second UE to the first UE. And, the first data unit may include the first ID of the second UE in the first layer and the second ID of the second UE in the second layer.

The relay UE may transmit the first data unit based on the second data unit to the first UE (S1120). As shown in FIG. 10, the second UE may be identified by the first UE through a combination of ID information included in the first data unit.

The method described in the example of FIG. 11 may be performed by the second device 200 of FIG. 14. That is, the relay UE in FIG. 11 may be implemented as the second device 200. For example, one or more processors 202 of the second device 200 of FIG. 11 may receive a second data unit from the second UE through one or more transceivers 206. One or more processors 202 may transmit the first data unit to the first UE through one or more transceivers 206.

Furthermore, one or more memories 204 of the second device 200 may store instructions for performing the method described in the example of FIG. 11 or the examples described below when executed by one or more processors 202.

Hereinafter, a method for identifying each UE within the U2U relay procedure described with reference to FIGS. 10 and 11 will be described in more detail.

Embodiment 1

Embodiment 1 relates to a U2U procedure between a source UE and a destination UE through a relay UE.

The source UE and the destination UE may set up a specific bearer between the source UE and the destination UE. In addition, the source UE and the destination UE may set their own adaptation layer entity and their own PDCP entity associated with a specific bearer through the relay UE. The adaptation layer of the source UE transmitting the first PDU carrying the PDCP PDU for a specific bearer may configure the UE ID field and the bearer ID field in the header of the first PDU. Here, the UE ID may correspond to the identification of the destination UE, and the bearer ID may correspond to the identification of a specific bearer between the source UE and the destination UE.

Here, identification information of the destination UE may be included in the UE ID field. That is, the UE ID value may be configured to uniquely identify the destination UE within the relay UE. Different UE ID values may be configured to uniquely identify different destination UEs served by the relay UE.

The source UE may be configured with the same UE ID value so that PDUs are transmitted to different relay UEs. Different RLC channels and DST values of the SL-SCH header of SL may be configured for different relay UEs.

The MAC entity of the source UE may generate one or more MAC PDUs carrying the first PDU to be transmitted to the relay UE. The SL-SCH header of the MAC PDU(s) may indicate an SRC value indicating the source UE and a DST value indicating the relay UE. As an example, the SRC field may carry the most significant bits (e.g., most significant 16 bits) of the source layer-2 ID field set to an identifier provided by a higher layer. The DST field may convey the most significant bits (e.g., most significant 8 bits) of the relay (or destination) layer-2 ID set to the identifier provided by the higher layer.

The MAC entity of the relay UE may receive the MAC PDU(s) carrying the first PDU and forward the first PDU to the adaptation layer of the relay UE through the corresponding RLC entity. After receiving the first PDU, the adaptation layer of the relay UE may identify the destination UE and a specific bearer based on the header of the first PDU (i.e. UE ID field and bearer ID field) and the header of the MAC PDU carrying the first PDU (i.e., the SRC field indicating the relay UE associated with the source UE).

Upon receiving the SDU of the first PDU, the adaptation layer of the relay UE may generate a second PDU carrying the SDU and configure the UE ID field and bearer ID field in the header of the second PDU. Here, the UE ID may correspond to the identification of the source UE, and the bearer ID may correspond to the identification of a specific bearer between the source UE and the destination UE.

Here, identification information of the source UE may be included in the UE ID field. That is, the UE ID value may be configured to uniquely identify the source UE within the relay UE. Different UE ID values may be configured to uniquely identify different source UEs that the relay UE provides services to. The destination UE may be configured with the same UE ID value for PDUs received from different relay UEs. Different RLC channels and SRC values of the SL-SCH header of SL may be configured for different relay UEs.

The MAC entity of the relay UE may generate one or more MAC PDUs carrying a second PDU to be transmitted to the destination UE. The SL-SCH header of the MAC PDU(s) may indicate an SRC value indicating the relay UE and a DST value indicating the destination UE.

The MAC entity of the destination UE may receive the MAC PDU(s) carrying the second PDU and deliver the second PDU to the adaptation layer of the destination UE through the corresponding RLC entity.

After receiving the second PDU, the adaptation layer of the destination UE may identify the source UE and a specific bearer based on the header of the second PDU (i.e., UE ID field and Bearer ID field) and the header of the MAC PDU carrying the second PDU (i.e., the SRC field indicating the relay UE associated with the source UE).

In the above-described embodiment, the first PDU and the second PDU may correspond to PDUs of the adaptation layer, and the adaptation layer may correspond to the SRAP layer. The source UE may be configured with different SRAP entities for different relay UEs and/or different destination UEs. The destination UE may be configured with different SRAP entities for different relay UEs and/or different source UEs.

As an example of the present disclosure, as shown in FIG. 12, a SRAP data PDU format (of the adaptation layer) including a SRAP header may be configured. Specifically, the SPRAP data PDU format including the SRAP header may include the D/C field of the header, a reserved field, a bearer ID field, a UE ID field, and a data field after the header.

Embodiment 1-1

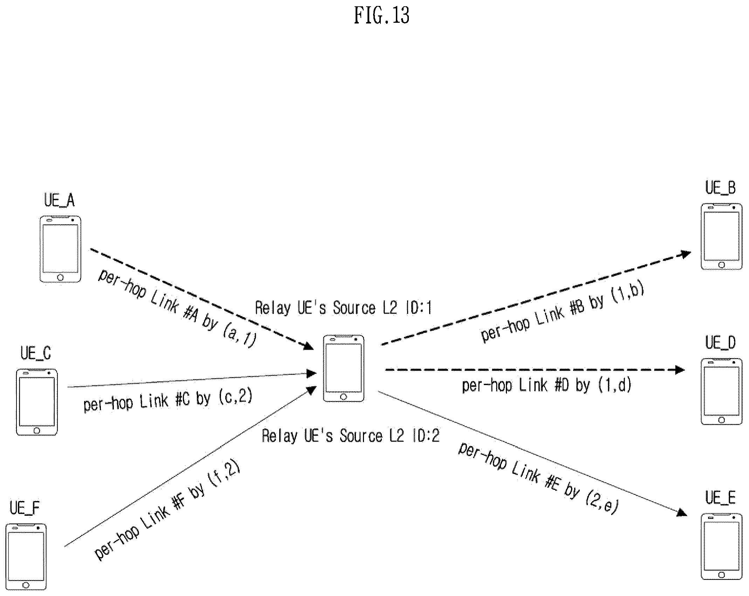

Embodiment 1-1 illustrates different U2U links through the same relay UE. As an example of the present disclosure, as shown in FIG. 13, assume that there are three source UEs (e.g., UE_A, UE_C, and UE_F) and three destination UEs (e.g., UE_B, UE_D, and UE_E). Here, source UEs and destination UEs may perform communication through a relay UE. As an example, there may be two U2U cases as follows.

- Case 1: Case where UE_A sends packets to UE _B and UE _C through the same relay UE
- Case 2: Case where UE _C and UE _F send packets to UE_E through the same relay UE

As an example of the present disclosure, the SRAP header of the SRAP PDU may be set by the transmitting UE as follows.

- The UE ID field may be set to the destination ID of UE_B or UE _D based on the destination of the PDCP PDU.
- The bearer ID field may be set to the bearer ID from UE_A to UE_B or UE_D based on the destination of the PDCP PDU and the bearer of the PDCP entity in which the PDCP PDU was generated.
- The header of the MAC PDU carrying the first PDU may indicate identification information of UE_A in the SRC field and may indicate identification information of the relay UE in the DST field.

In Case 1, when the relay UE receives a PDCP PDU from UE_A, it may transmit an SRAP PDU carrying the PDCP PDU (i.e., the second PDU in Embodiment 1) to UE_B or UE_D. The header of the SRAP PDU is set as follows.

- The UE ID field may be set to the source ID of UE_A based on the source of the MAC PDU header carrying the PDCP PDU.
- The Bearer ID field is set to the bearer ID of the bearer from UE_A to UE_B or UE_D the source of the header of the received MAC PDU carrying the PDCP PDU and the destination and the bearer indicated by the UE ID field and the Bearer ID field of the received SRAP PDU.
- The header of MAC PDU carrying second PDU may indicate the identification of the relay UE in the SRC field based on the destination indicated by the UE ID field of the received SRAP PDU, and may indicate the identification of UE_B or UE_D in the DST field.

In Case 2, UE_C or UE_F may transmit a SRAP PDU carrying a PDCP PDU (i.e., the first PDU in Embodiment 1) to UE_E through the relay UE. And, the header of the SRAP PDU may be set as follows.

- The UE ID field may be set to the destination ID of UE_E based on the destination of the PDCP PDU.
- The bearer ID field may be set to the bearer ID from UE_C or UE_F to UE_E based on the destination of the PDCP PDU and the bearer of the PDCP entity in which the PDCP PDU was created.
- The header of the MAC PDU carrying the first PDU may indicate the identification of UE_C or UE_F in the SRC field and the identification of the relay UE in the DST field.

In case 1, when the relay UE receives a PDCP PDU from UE_C or UE_F, the SRAP PDU carrying the PDCP PDU (i.e., the second PDU in Embodiment 1) is transmitted to UE_E, and the header of the SRAP PDU may be configured as follows.

- The UE ID field may be set to the source ID of UE_C or UE_F based on the source of the MAC PDU header carrying the PDCP PDU.
- The bearer ID field may be set to the bearer ID of the bearer from UE_C or UE_F to UE_E based on the source of the header of the received MAC PDU carrying the PDCP PDU and the destination and the bearer indicated by the UE ID field and the Bearer ID field of the received SRAP PDU.
- The header of the MAC PDU carrying the second PDU may indicate identification information of the relay UE in the SRC field and identification information of the UE_E in the DST field, based on the destination indicated by the UE ID field of the received SRAP PDU.

For the above-described setting, the relay UE may determine the UE ID value for each source UE and each destination UE. As an example, as shown in FIG. 13, the relay UE may determine the bearer ID value for each bearer for each pair of source UEs and destination UE, from UE_A to UE_F.

Accordingly, the relay UE may inform the source UE of the UE ID values for different destination UEs and the bearer ID for each source/destination pair by transmitting a PC5-RRC message to each source UE. Additionally, the relay UE may inform the destination UE of the UE ID values for different source UEs and the bearer ID for each source/destination pair by transmitting a PC5-RRC message to each destination UE.

According to the above-described embodiment, when communication through a relay UE is performed within a UE-to-UE procedure, each of one or more source UEs and a destination UE may be efficiently identified.

General Device to which the Present Disclosure may be applied

FIG. 14 illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method performed by a first user equipment (UE) in a wireless communication system, the method comprising:

receiving, from a relay UE, a first data unit; and
decoding the first data unit including a first identifier (ID) of a second UE in a first layer and a second ID of the second UE in a second layer,
wherein the second UE related to the first data unit is identified by the first UE based on a combination of the first ID and the second ID.

2.   The method of claim 1, wherein:
a specific bearer related to a relay procedure between the first UE and the second UE is set up through the relay UE.

3.   The method of claim 2, wherein:

a source (SRC) field or a destination (DST) field indicating the second ID is included in a header of the first data unit, and
the first ID and a third ID related to the specific bearer are included in a header of a first protocol data unit (PDU) included in the first data unit.

4. The method of claim 1, wherein:

   the first PDU is configured based on a first sidelink adaptation protocol (SRAP) PDU, and
   the first ID is indicated by a UE ID field included in the first SRAP PDU.

5. The method of claim 1, wherein:
   the first ID is transmitted to the first layer of the first UE by the second layer of the first UE.

6. The method of claim 5, wherein:
   the second UE related to the first data unit is identified by the first layer of the first UE based on a combination of the first ID and the second ID.

7. The method of claim 2, wherein:

   the first data unit is generated based on a second data unit transmitted from the second UE to the relay UE, and
   the second data unit includes a fourth ID of the first UE in the first layer and a fifth ID of the second UE in the second layer.

8. The method of claim 7, wherein:

   a SRC field or a DST field indicating the fifth ID is included in a header of the second data unit, and
   the fourth ID and the third ID related to the specific bearer are included in a header of the second PDU included in the second data unit.

9. The method of claim 8, wherein:

   the second PDU is configured based on the second SRAP PDU, and
   the fourth ID is indicated by a UE ID field included in the second SRAP PDU.

10. The method of claim 1, wherein:

    the first UE is either a source UE or a destination UE, and
    the second UE is either a source UE or a destination UE.

11. A first user equipment (UE) in a wireless communication system, the first UE comprising:

    at least one transceiver; and
    at least one processor coupled to the at least one transceiver;
    wherein the at least one processor is configured to:

       receive, from a relay UE through the at least one transceiver, a first data unit; and
       decode the first data unit including a first identifier (ID) of a second UE in a first layer and a second ID of the second UE in a second layer,
       wherein the second UE related to the first data unit is identified by the first UE based on a combination of the first ID and the second ID.

12. A method performed by a relay user equipment (UE) in a wireless communication system, the method comprising:

    receiving a second data unit from a second UE; and
    transmitting a first data unit based on the second data unit to a first UE,
    wherein the second data unit includes a fourth identifier (ID) of the first UE in a first layer and a fifth ID of the first UE in a second layer, and
    wherein the first UE related to the second data unit is identified by the relay UE based on a combination of the fourth ID and the fifth ID.

13. A relay user equipment (UE) in a wireless communication system, the relay UE comprising:

    at least one transceiver; and

at least one processor coupled to the at least one transceiver;
wherein the at least one processor is configured to:

receive, through the at least one transceiver, a second data unit from a second UE; and
transmit, through the at least one transceiver, a first data unit based on the second data unit to a first UE,
wherein the second data unit includes a fourth identifier (ID) of the first UE in a first layer and a fifth ID of the first UE in a second layer, and
wherein the first UE related to the second data unit is identified by the relay UE based on a combination of the fourth ID and the fifth ID.

14. A processing device configured to control a first user equipment (UE) in a wireless communication system, the processing device comprising:

at least one processor; and
at least one computer memory operatively coupled to the at least one processor and storing instructions for performing operations upon being executed by the at least one processor,
wherein the operations comprise:

receiving, from a relay UE, a first data unit; and
decoding the first data unit including a first identifier (ID) of a second UE in a first layer and a second ID of the second UE in a second layer,
wherein the second UE related to the first data unit is identified by the first UE based on a combination of the first ID and the second ID.

15. At least one non-transitory computer readable medium storing at least one instruction, wherein:
the at least one instruction executed by at least one processor controls a device in a wireless communication system to perform:

receiving, from a relay UE, a first data unit; and
decoding the first data unit including a first identifier (ID) of a second UE in a first layer and a second ID of the second UE in a second layer,
wherein the second UE related to the first data unit is identified by the first UE based on a combination of the first ID and the second ID.

FIG.1

FIG.2

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

FIG.5

## FIG.6

INITIAL CELL SEARCH — PSS/SSS& (DL RS) & PBCH — S601

SYSTEM INFORMATION RECEPTION — PDCCH/PDSCH (BCH) — S602

RANDOM ACCESS PROCEDURE — PRACH — S603; PDCCH/PDSCH — S604; PUSCH — S605; PDCCH/PDSCH — S606

GENERAL DL/UL Tx/Rx — PDCCH/PDSCH — S607; PUSCH/PUCCH — S608

· DL/UL ACK/NACK
· UE CQI/PMI RI REPORT USING PUSCH AND PUCCH

## FIG.7

(a)　　　　　　　　　　　　　　(b)

## FIG.8

## FIG.9

## FIG.10

| RECEIVING THE FIRST DATA UNIT FROM THE RELAY UE | ~S1010 |

| DECODING THE FIRST DATA UNIT INCLUDING THE FIRST ID OF THE SECOND UE IN THE FIRST LAYER AND THE SECOND ID OF THE SECOND UE IN THE SECOND LAYER | ~S1020 |

FIG.11

RECEIVING THE SECOND DATA UNIT FROM THE SECOND UE ~S1110

TRANSMITTING THE FIRST DATA UNIT BASED ON THE SECOND DATA UNIT TO THE FIRST UE ~S1120

FIG.12

| D/C | R | R | BEARER ID | Oct 1 |
| UE ID | | | | Oct 2 |
| Data | | | | Oct 3 |

. . .

## FIG.13

UE_A

per-hop Link #A by (a,1)

Relay UE's Source L2 ID:1

UE_B

per-hop Link #B by (1,b)

UE_C

per-hop Link #C by (c,2)

UE_D

per-hop Link #D by (1,d)

Relay UE's Source L2 ID:2

per-hop Link #F by (f,2)

per-hop Link #E by (2,e)

UE_F

UE_E

EP 4 694 355 A1

FIG.14

## INTERNATIONAL SEARCH REPORT

| | International application No. |
|---|---|
| | **PCT/KR2024/004516** |

| **A.** | **CLASSIFICATION OF SUBJECT MATTER** |
|---|---|

**H04W 40/24**(2009.01)i; **H04W 40/02**(2009.01)i; **H04W 76/11**(2018.01)i; **H04W 76/14**(2018.01)i; **H04W 88/04**(2009.01)i; **H04W 92/18**(2009.01)i

According to International Patent Classification (IPC) or to both national classification and IPC

| **B.** | **FIELDS SEARCHED** |
|---|---|

Minimum documentation searched (classification system followed by classification symbols)

H04W 40/24(2009.01); H04L 65/40(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말-대-단말(UE-to-UE, U2U), 릴레이(relay), 데이터 유닛(data unit), 식별자(identifier, ID), 레이어(layer), 베어러(bearer) 셋업(setup), 사이드링크 적응 프로토콜(sidelink relay adaptation protocol, SRAP) PDU, source(SRC) 필드(field), destination(DST) 필드(field)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | APPLE. Discussion on user plane design for Layer 2 UE-to-UE Relay. R2-2300760, 3GPP TSG RAN WG2 Meeting #121. Athens, Greece. 17 February 2023. See pages 1-4; and figures 1 and 3-4. | 1-15 |
| Y | SAMSUNG. Finalizing design of Adapt layer. R2-2201533, 3GPP TSG-RAN WG2 #116bis-e, E-meeting. 11 January 2022. See sections 2-3. | 1-15 |
| A | VIVO. Discussion on the L2 specific parts for U2U relaying. R2-2300688, 3GPP TSG-RAN WG2 Meeting #121. Athens, Greece. 17 February 2023. See sections 1-2.1. | 1-15 |
| A | 3GPP; TSG RAN; NR; Sidelink Relay Adaptation Protocol (SRAP) Specification (Release 17). 3GPP TS 38.351 V17.4.0. 28 March 2023. See pages 7-15. | 1-15 |
| A | KR 10-2022-0003456 A (ASUSTEK COMPUTER INCORPORATION) 10 January 2022 (2022-01-10) See paragraphs [0192]-[0195]; and claims 1-10. | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 June 2024** | **01 July 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004516**

| Patent document cited in search report | | | Publication date (day/month/year) | Patent family member(s) | | | Publication date (day/month/year) |
|---|---|---|---|---|---|---|---|
| KR | 10-2022-0003456 | A | 10 January 2022 | CN | 113891292 | A | 04 January 2022 |
| | | | | CN | 113891292 | B | 12 January 2024 |
| | | | | KR | 10-2023-0054640 | A | 25 April 2023 |
| | | | | KR | 10-2024-0018552 | A | 13 February 2024 |
| | | | | US | 11871465 | B2 | 09 January 2024 |
| | | | | US | 2022-0007445 | A1 | 06 January 2022 |

Form PCT/ISA/210 (patent family annex) (July 2022)